# EUROPEAN PATENT APPLICATION

(11) **EP 4 567 764 A1**
(43) Date of publication of application: **11.06.2025**
(21) Application number: 23215305.6
(22) Date of filing: 08.12.2023
(51) Int. Cl.: G08B 25/01, G08G 1/00

(54) **VEHICULAR EMERGENCY NOTIFICATION**

(71) Applicant: Aptiv Technologies AG, 8200 Schaffhausen (CH)
(72) Inventor: Hasecke, Frederik, 42719 Solingen (DE); Hahn, Lukas, 42113 Wuppertal (DE)
(74) Representative: Bardehle Pagenberg Partnerschaft mbB Patentanwälte Rechtsanwälte

(57) **Abstract**

A computerized method of emergency notification for a vehicle is presented. The vehicle comprises external sensors and internal sensors and the method comprises predicting a likelihood of an occurrence of an accident of the vehicle based on vehicle data and data received from one or more of the external sensors and/or one or more of the internal sensors, and, in response to the likelihood of the occurrence of the accident being higher than an accident threshold, transmitting a pre-accident signal to a relay station, wherein the pre-accident signal comprises vehicle and passenger status information generated based on vehicle data before the accident, data received from one or more of the external sensors before the accident, and data received from one or more of the internal sensors before the accident.

## Description

### FIELD

The present disclosure generally relates to safety improvements for vehicles and, in particular, to methods and systems of emergency notification for vehicles.

### BACKGROUND

Smart vehicles, such as smart cars, smart busses, and the like, are on their way to significantly improving the safety of passengers. Such smart vehicles may be equipped with on-board sensors, which are capable of capturing the situation of the vehicle's interior and exterior. The output of these sensors can be used for different safety related tasks.

Smart vehicles are nowadays equipped with emergency call systems. These systems are designed to automatically initiate an emergency call to an emergency call center in the event of a traffic accident, providing crucial vehicle information such as accident time, location coordinates, direction of travel, and vehicle characteristics. In addition to automatic activation, manual transmission of emergency calls is also possible. Some systems also provide an optional voice connection between the emergency call center and the vehicle occupants.

Although some emergency call systems already incorporate vital signs of vehicle occupants in the emergency call, use collision patterns and occupant states for rescue determination, and improve emergency response times through automatic transmission of location and sensor information to emergency agencies, these emergency call systems need the installation and/or use of additional sensors not usually provided in vehicles, e.g., biometric or infrared sensors, for determining the vital signs, are merely capable of determining the collision pattern in a very coarse manner, and only transmit the emergency call after the accident has occurred.

Hence, there is a need for providing improved methods and systems of emergency notification for vehicles.

### SUMMARY

In this context, methods, systems and computer program products are presented as defined by the independent claims.

More specifically, a computerized method of emergency notification for a vehicle is presented. The vehicle comprises external sensors and internal sensors and the method comprises predicting a likelihood of an occurrence of an accident of the vehicle based on vehicle data and data received from one or more of the external sensors, and, in response to the likelihood of the occurrence of the accident being higher than an accident threshold, transmitting a pre-accident signal to a relay station, wherein the pre-accident signal comprises vehicle and passenger status information generated based on vehicle data before the accident, data received from one or more of the external sensors before the accident, and data received from one or more of the internal sensors before the accident.

In some embodiments, the method further comprises, in response to the accident having occurred, determining a severity level of the accident based on vehicle data, data received from one or more of the external sensors, and data received from one or more of the internal sensors, and, in response to the severity of the accident being higher than a severity threshold, transmitting a post-accident signal to the relay station, wherein the post-accident signal indicates a confirmation of the accident and comprises vehicle and passenger status information generated based on vehicle data after the accident, data received from one or more of the external sensors after the accident, and data received from one or more of the internal sensors after the accident.

In further embodiments, the method comprises, in response to the severity level of the accident being lower than the severity threshold, transmitting a no-severe-accident signal to the relay station to indicate that no severe accident has occurred and to trigger a deletion of the pre-accident signal received at the relay station. In yet further embodiment, the no-severe-accident signal is issued manually by a passenger of the vehicle via a user interface on a display of the vehicle or automatically by an on-board computing system of the vehicle in response to determining that the severity level is lower than the severity threshold.

In some embodiments, the method further comprises, in response to the accident not having occurred, transmitting a no-accident signal to the relay station to indicate that no accident has occurred and to trigger a deletion of the pre-accident signal received at the relay station. In further embodiments, the no-accident signal is issued manually by a passenger of the vehicle via a user interface on a display of the vehicle or automatically by an on-board computing system of the vehicle in response to detecting based on data from at least one of the external sensors and internal sensors that the accident has not occurred.

In some embodiments, the vehicle data comprises at least one of speed, acceleration, steering direction, tire orientation, and geographic position of the vehicle. In some further embodiments, the external sensors comprise at least one of a radar sensor, a camera, and a lidar sensor capturing a surrounding of the vehicle at specified time intervals.

In some embodiments, the internal sensors comprise at least one cabin camera capturing a cabin of the vehicle a specified time intervals. In further embodiments, the vehicle and passenger status information before and after the accident is determined based on images captured by the cabin camera, wherein the determination is based on at least one of semantic segmentation of the image, depth information analysis of the image, determination of 3-dimensional pose estimation, and vital sign monitoring.

In some embodiments, the vehicle and passenger status information before the accident comprises at least one of an estimated severity level of the accident, a vehicle location, an estimated number of vehicles involved, an estimated type of vehicles involved, object movement prediction, a number of passengers in the vehicle, vital signs of passengers in the vehicle, a position of the passengers in the vehicle, and a seatbelt status of the passengers in the vehicle.

In some embodiments, the vehicle and passenger status information after the accident comprises at least one of a severity level of the accident, a vehicle location, a number of vehicles involved, a type of vehicles involved, vehicle deformation information, an accident location at the vehicle, object movement information, environment hazard information, a number of passengers in the vehicle, vital signs of passengers in the vehicle, a position of the passengers in the vehicle, injury severity information of the passengers in the vehicle, and a seatbelt status of the passengers in the vehicle.

Another aspect concerns a system of emergency notification, the system comprising one or more internal sensors, one or more external sensors, and a computing and communication system configured to execute the methods as described herein.

A further aspect concerns a vehicle comprising the system of emergency notification as described herein.

A final aspect concerns a computer program product comprising instructions, which, when executed on a computer, cause the computer to perform the methods as described herein.

These and other objects, embodiments and advantages will become readily apparent to those skilled in the art from the following detailed description of the embodiments having reference to the attached figures, the disclosure not being limited to any particular embodiments.

### BRIEF DESCRITPTION OF THE DRAWINGS

The foregoing and further objects, features and advantages of the present subject matter will become apparent from the following description of exemplary embodiments with reference to the accompanying drawings, wherein like numerals are used to represent like elements, in which:
Fig. 1 is a high-level flowchart of the method for emergency notification as described herein.
Fig. 2 depicts a flowchart of the method if a severe accident has occurred according to embodiments.
Fig. 3 depicts a flowchart of the method if a non-severe accident has occurred according to embodiments.
Fig. 4 depicts a flowchart of the method if no accident has occurred according to embodiments.
Figs. 5A, 5B, 6A, and 6B show different classified and processed input images from on-board cameras used for determining the vehicle and passenger status information according to embodiments.
Fig. 7 is an overview on the processes performed for emergency notification according to embodiments.
Fig. 8 presents a car with external and internal sensors and systems for providing the functionalities described herein.
Fig. 9 presents an interior of a vehicle with possible positions of on-board cameras.
Fig. 10 is diagrammatic representation of a computing system implementing the functionalities described herein.

### DETAILED DESCRIPTION

The present disclosure relates to methods and systems of emergency notifications for vehicles.

Safety related assistance systems, such as emergency notification systems, also called eCall-systems, become more and more relevant in modern vehicles, such as cars, busses, motorcycles, and the like, which may even be required by law to be equipped with such systems. It is noted that in the following the notations "vehicle" and "car" are to be understood interchangeably and relate to any vehicles, in which the emergency notification systems as described herein are applicable.

Emergency notification systems can reduce the emergency response time dramatically and save the lives of vehicle's passengers. Hence, it is beneficial if emergency notifications are reliably, i.e., under any circumstances, provided, comprise holistic information about the vehicle and its passengers, and are, in particular, sent as soon as possible to emergency call centers. Such an emergency notification system, in which a pre-accident signal enables a faster emergency response and holistic data of the vehicle enables a more tailored emergency response, is described in the following.

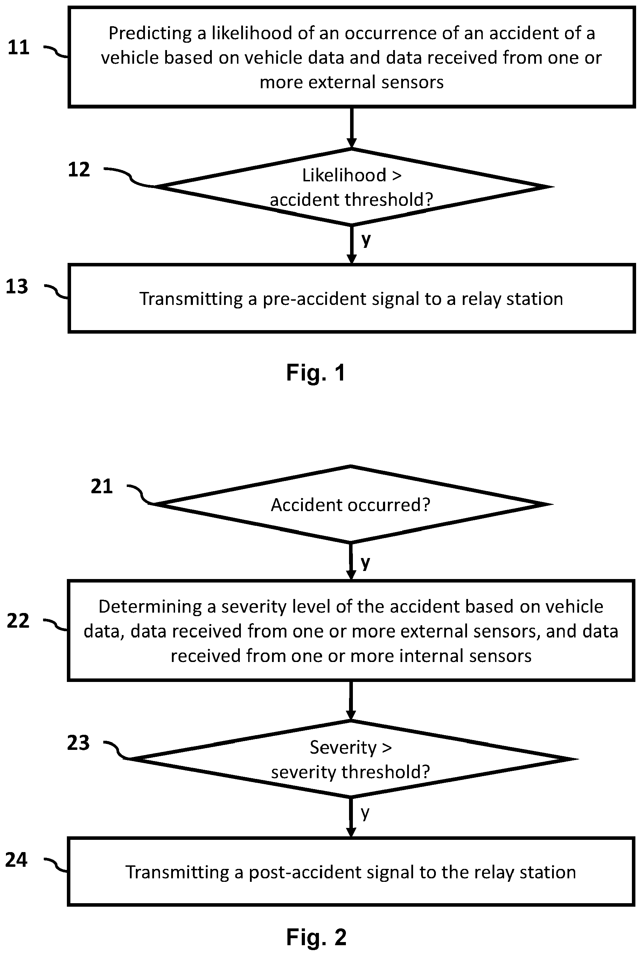

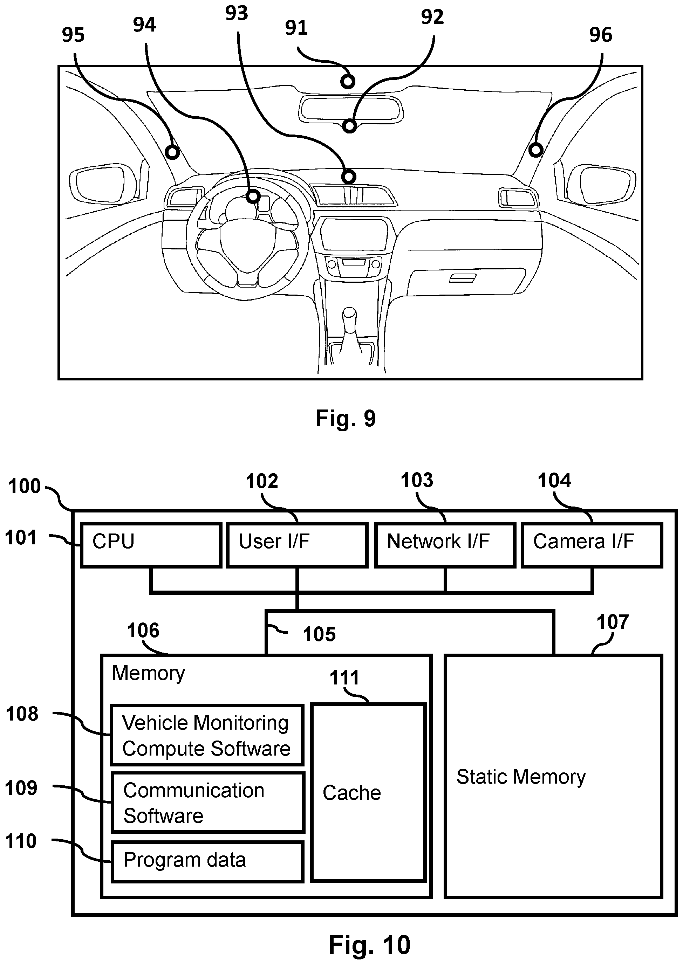

Fig. 1 is a high-level flowchart of a method for emergency notification sent by a vehicle. The vehicle comprises one or more external sensors and one or more internal sensors. The internal sensors may in some embodiments comprise at least one cabin camera capturing an image of a cabin of the vehicle at specified time intervals. Other internal sensors may, e.g., comprise cabin radar sensors, cabin infrared sensors, or the like. The cabin or on-board cameras may also take different forms, such as described later with respect to Fig. 9. The external sensors may comprise at least one of a radar sensor, a camera, and a lidar sensor capturing a surrounding of the vehicle at specified time intervals. Other external sensors may be ultrasonic sensors or the like.

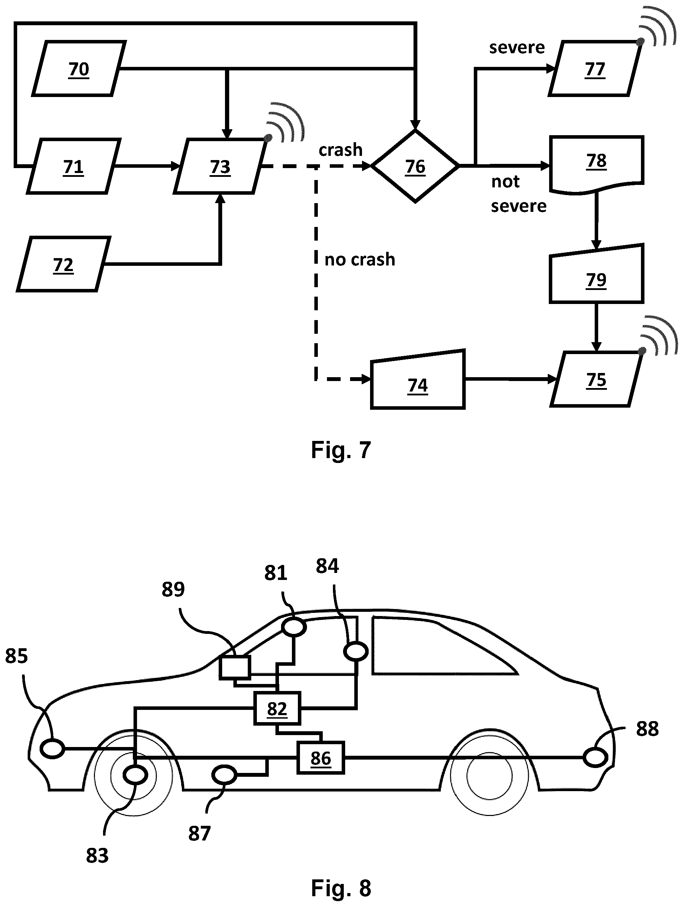

The method starts with predicting a likelihood of an occurrence of an accident (also denoted in the following as likelihood of the accident) of the vehicle based on vehicle data and data received from one or more external sensors in box 11. In some embodiments, determining the likelihood of the accident may additionally or alternatively be based on data received from one or more internal sensors (not shown). The vehicle data may in some embodiments, comprise at least one of speed, acceleration, steering direction, tire orientation, and geographic position of the vehicle. The geographic position of the vehicle may be determined based on the Global Positioning System (GPS) and may be expressed in a latitude and longitude value. Vehicle data may be provided to the emergency notification system as described herein by an advanced driver assistance system as described with respect to Fig. 8 below, which already collects vehicle data. Vehicle data, thus, is general data relating to the current status of the vehicle and may thus be available at a vehicle control system anyway for other purposes such as outputting to the driver via a user interface. Moreover, the data received from one or more external sensors for predicting the likelihood of the accident may comprise distance, velocity, acceleration, and/or size information of other objects around the vehicle. Using exterior vision algorithms that analyze data from external sensors such as, e.g., radar, cameras, and lidar, it can be accurately predicted if an accident is about to happen and is unlikely to be avoided.

In some embodiments, data from internal sensors may also be used for predicting a likelihood of the accident. Additionally or alternatively, further vehicle systems are involved for predicting a likelihood of the accident. For example, Active Cruise Control (ACC), also known as Adaptive Cruise Control, can support the emergency notification system as described herein. ACC is an advanced driver assistance system (ADAS) feature typically found in modern vehicles and enhances the traditional cruise control system by incorporating sensors and technology to automatically adjust the vehicle's speed to maintain a safe following distance from the vehicle ahead. Hence, the ACC already monitors the surrounding of the vehicle periodically and predicts movement of other objects, in particular, other vehicles.

Like conventional cruise control, ACC allows the driver to set a desired cruising speed for the vehicle, usually through a vehicle's dashboard controls. Hence, the ACC also captures and controls current speed of the vehicle. ACC further obtains input from external sensors as described above, that continuously monitor the road ahead and detect other vehicles in the same lane. These sensors, for example, measure the distance between the vehicle and a vehicle in front of the vehicle. If the ACC system detects that the distance to the vehicle ahead is decreasing and the vehicle is approaching it too quickly, it will automatically reduce the vehicle's speed by decelerating or applying the brakes. The system will do this until a safe following distance is reestablished.

The ACC allows a driver to set a preferred following distance, which may be selected predefined distance settings, such as short, medium, or long, depending on a selected comfort level. The ACC then maintains this distance from the other vehicle in front of the vehicle, even if the other vehicle changes its speed. Hence, the ACC may also control the speed of the vehicle, e.g., if the road ahead is clear or if the other vehicle in front of the vehicle accelerates, the ACC system will gradually increase the vehicle's speed up to the set cruise control speed, as long as it's safe to do so. Hence, the ACC may provide a plethora of information to the emergency notification system.

Predicting a likelihood of the accident may be based on a basic model, e.g. by merely determining the distance to and velocity of the object or vehicle in front of the vehicle, e.g., obtained from the ACC or from external sensors and determined within the emergency notification system, and the velocity (i.e., speed and direction) of the vehicle. The likelihood of the accident may, e.g., be determined by in how many different scenarios the accident is to occur. For example, considering three scenarios, i.e., what may happen without braking, pressing the brakes the halfway, and full braking. If for the last two the model determines that an accident will inevitably occur, the likelihood of the accident may be determined to be 66.6%.

In some embodiments, the likelihood of the accident may be determined by a more complex model based on trajectory prediction. Trajectory prediction is a process used in various fields, including robotics, autonomous vehicles, and computer vision, to anticipate the future path or movement of objects or entities based on their current state and past behavior. It involves making educated guesses about how an object will move in the future to facilitate better decision-making in applications such as autonomous navigation, collision avoidance, and tracking. Trajectory prediction can, however, also be used in predicting an accident as in the herein described emergency notification system.

Trajectory prediction usually starts with collecting data about the obj ect(s) of interest. This data can come from various sensors in the vehicle, such as cameras, lidar, radar, or GPS, depending on the application. The data may include information about the vehicle's current position, velocity, and acceleration, as well as historical data about its past movements. Then, the first step is to estimate the current state of the vehicle. This includes the vehicle's position and velocity at the current time. This estimation can be based on sensor measurements and may involve sensor fusion techniques to combine information from multiple sensors for greater accuracy.

To predict the future trajectory, a motion model is used. A motion model is a mathematical representation of how the object, i.e., the vehicle is expected to move. The choice of motion model depends on the type of vehicle and the specific application. Common models include constant velocity, constant acceleration, or more complex models for objects with specific behaviors. With the estimated state and motion model, a prediction algorithm is used to calculate the future path of the vehicle. This algorithm extrapolates the vehicle's trajectory into the future based on the motion model. The length of the prediction horizon, i.e., how far into the future the prediction extends, is typically determined by the specific application and the required decision time frame.

Therefore, in some embodiments, a trajectory prediction algorithm provides one or more predicated paths of the vehicle but may also predict paths of other vehicles or pedestrians or the like. The likelihood of the accident then depends on the trajectories (including the speeds) of the vehicle and the other objects. The likelihood may take any value between 0 and 1 or 0% to 100% and reflect how sure the model is about the accident. Moreover, the likelihood of the accident may also depend on the time to a possible crash. This time may be a factor in the prediction but may also be set in advance. For example, the likelihood of the accident may reflect whether an accident is likely in 3 seconds (or any other suitable value). It is noted that the likelihood of the accident may be continuously determined, e.g., at pre-defined time intervals, such as every second. Other suitable time intervals are applicable, too.

The method then proceeds with a determination whether the likelihood of the accident is higher than an accident threshold as depicted with diamond 12. For example, if the likelihood of the accident in the next 3 seconds is determined to be 85% and the threshold is set to be 75%, it is determined that an accident is likely, which leads to a transmission of a pre-accident signal to a relay station in box 13. The relay station may, e.g., be an emergency call center, a first responder line, or the like. The pre-accident signal comprises vehicle and passenger status information generated based on vehicle data at the time of determining that an accident is likely, i.e., before the accident, data received from one or more of the external sensors before the accident, and data received from one or more of the internal sensors before the accident. Hence, at the moment that the emergency notification system as described herein determines that an accident is likely to occur, the pre-accident signal is transmitted to the relay station.

The vehicle and passenger status information before the accident may be determined based on images captured by a cabin camera, wherein the determination is based on at least one of semantic segmentation of the image, depth information analysis of the image, determination of 3-dimensional pose estimation, and vital sign monitoring. The vehicle and passenger status information before the accident may comprise at least one of an estimated severity level of the accident, a vehicle location, an estimated number of vehicles involved, an estimated type of vehicles involved, object movement prediction, a number of passengers in the vehicle, vital signs of passengers in the vehicle, a position of the passengers in the vehicle, and a seatbelt status of the passengers in the vehicle. The pre-accident signal may also be tagged as pre-accident signal such that the relay station can differentiate the pre-accident signal from other signals. An exemplary Hypertext Markup Language (HTML) structure of such a pre-accident signal is shown in the following Table 1.

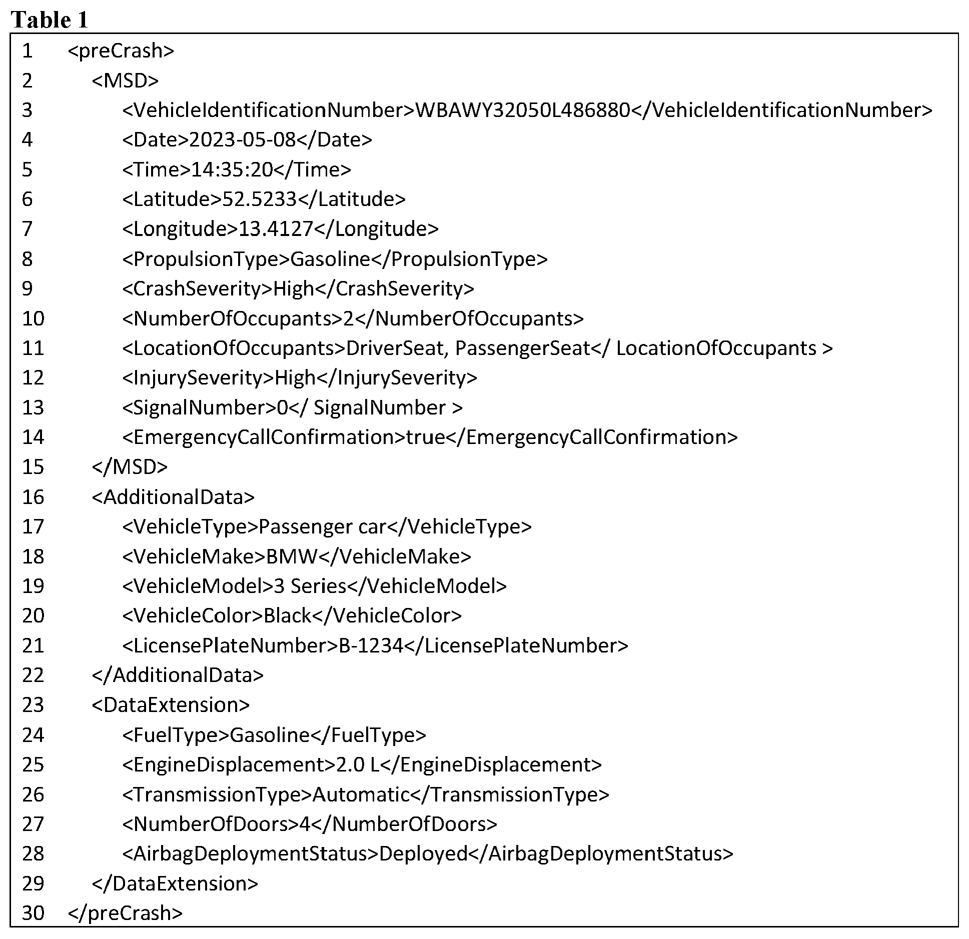

As can be seen in Table 1, the pre-accident signal in this example comprises three main components, namely, MSD (for minimum set of data, from lines 2 to 15), additional data (from lines 15 to 22), and data extension (from lines 23 to 29). It is apparent to the skilled person that, in some embodiments, the additional data and data extension can be omitted in the pre-accident message. The MSD is similar to what is already defined for the current European eCall standard, which defines message content for an (post-) accident signal. It is noted that the example pre-accident signal of Table 1 can be adapted to comprise further or less fields as required. In some described embodiments, the pre-access signal may particularly comprise an estimated crash severity (as shown in line 9 of Tablet) and the number of occupants (as shown in line 10 of Table 1). Additionally, the location of the occupants is indicated (as shown in line 11 of Table 1), an estimated injury severity (as shown in line 12 of Table 1), and an identification number of the pre-accident signal (as shown in line 13 of Table 1). The identification number can be used for fast determination which pre-accident signal further is related to which post-, no-, and/or no-severe-accident signal as is described below.

As was already indicated in the example pre-accident signal of Table 1, a likelihood of the severity of the accident may be estimated before an accident. Such a determination may be based on the same information that is used for determining the likelihood of the accident but additionally based on information provided by internal sensors, such as on-board cameras. For example, it may be predicted where the accident will occur, e.g., right rear door, and whether a person is sitting right in position. Additionally or alternatively, for predicting the severity of the accident, the seat belt situation, the age of the passengers, the objects in the vehicle, or the like, may be taken into account.

The pre-accident signal may generally notify a relay station to dispatch emergency services to ensure timely help. This pre-accident signal may, as explained above, be similar to the existing eCall system but with additional information. It may include the accident location, number of cars involved, vital signs of all passengers, and the position of all passengers inside the vehicle obtained from interior cameras using 2D and 3D body key points (explained later). Additionally, the system herein described may utilize advanced interior sensing features to double-check how many passengers are present in the vehicle and to check if passengers are wearing seat belts properly. For instance, vision algorithms may detect if passengers have used their seat belt wrongly, such as under the arm instead of over, which can increase the risk of injuries in the event of an accident.

This additional information can yield important insights for emergency medical technicians (EMT) to better assess the situation and provide appropriate care to the passengers. Conventional seat-based occupant detection systems and seat buckle sensor would not be able to provide this information with absolute accuracy, as heavy objects on seats might be mistaken for persons and seat belt misuse could not be detected at all. Using cabin perception sensors and algorithms, the potential risk of (unsecured) cargo on board the vehicle can be classified, and its movement predicted before a potential crash might take place. Using this information, additional hazardous influences towards the health and safety of passengers due to the behavior of objects in case of abrupt deceleration (becoming projectiles) can be estimated and considered in damage estimation in the pre-accident signal.

Now turning to Fig. 2, which depicts a flowchart of the method if a severe accident has occurred according to embodiments. This may be determined by external and/or internal sensors of the vehicle. For example, if a high deacceleration is determined by wheel sensors of the vehicle and/or deformations of the vehicle cabin is determined by on-board cameras, an accident may be determined as shown in diamond 21. The method then proceeds with determining a severity level of the accident based on vehicle data, data received from one or more of the external sensors, and data received from one or more of the internal sensors as shown in box 22. This determination may also be based on deformations of the vehicle cabin but also based on further information from internal sensors of the vehicle before and after the accident. For example, if a passenger was detected on the co-driver seat and a large deformation is then detected after the accident at this place, a high severity may be determined. Other examples, may be based on a comparison of the pose of the passenger before and after the accident.

The method then compares the determined severity, which may also take a value between 0 and 1, wherein 0 is no severity and 1 the highest severity, with a severity threshold as shown in diamond 23. If the severity is determined to be higher than the severity threshold (yes-branch), the method proceeds to box 24 and transmits a post-accident signal to the relay station. The post-accident signal indicates a confirmation of the accident and comprises vehicle and passenger status information generated based on vehicle data after the accident, data received from one or more of the external sensors after the accident, and data received from one or more of the internal sensors after the accident.

The vehicle and passenger status information after the accident may be determined based on images captured by a cabin camera, wherein the determination is based on at least one of semantic segmentation of the image, depth information analysis of the image, determination of 3-dimensional pose estimation, and vital sign monitoring. The vehicle and passenger status information after the accident may comprise at least one of a severity level of the accident, a vehicle location, a number of vehicles involved, a type of vehicles involved, vehicle deformation information, an accident location at the vehicle, object movement information, environment hazard information, a number of passengers in the vehicle, vital signs of passengers in the vehicle, a position of the passengers in the vehicle, injury severity information of the passengers in the vehicle, and a seatbelt status of the passengers in the vehicle. The post-accident signal may also be tagged as post-accident signal such that the relay station can differentiate the post-accident signal from other signals, such as the pre-accident signal described before with respect to Fig. 1. An exemplary Hypertext Markup Language (HTML) structure of such a post-accident signal is shown in the following Table 2.

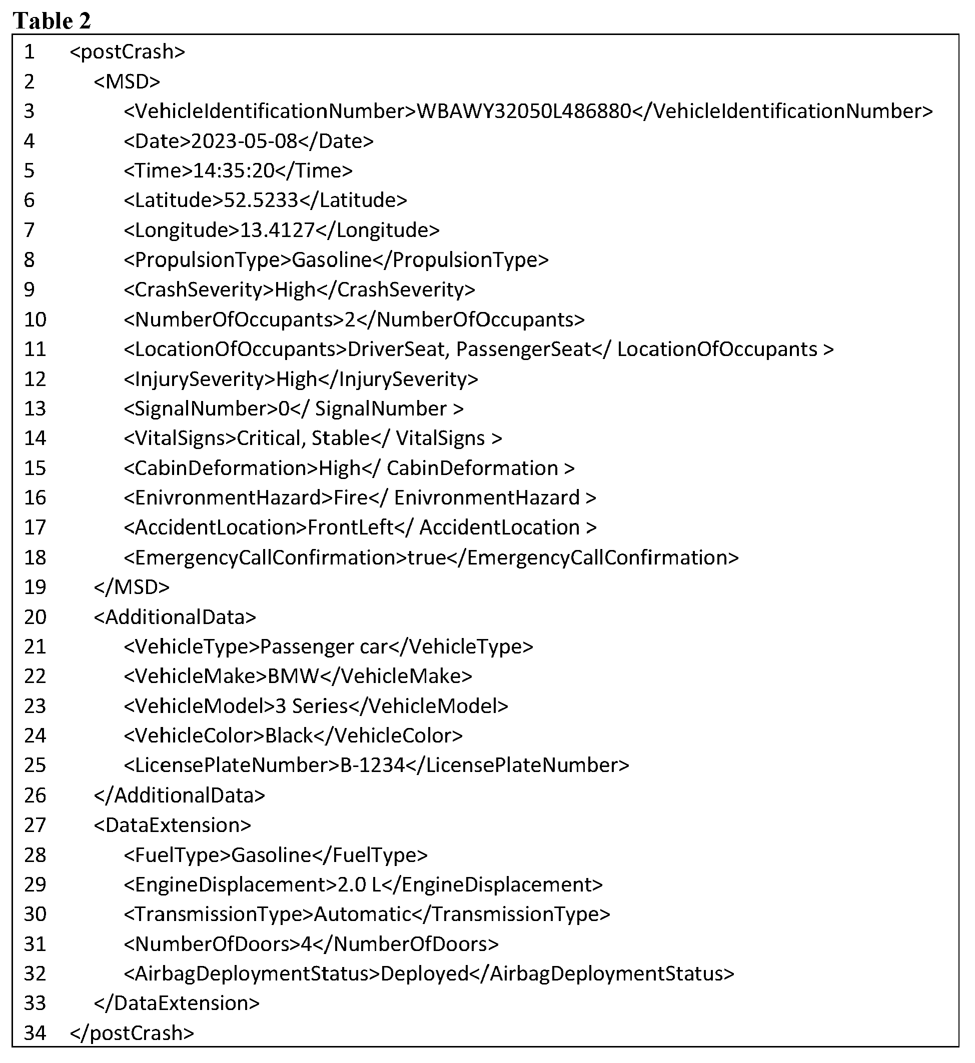

As can be seen in Table 2, the pre-accident signal in this example also comprises three main components, namely, MSD (for minimum set of data, from lines 2 to 19), additional data (from lines 20 to 26), and data extension (from lines 27 to 33). It is apparent to the skilled person that, in some embodiments, the additional data and data extension can be omitted in the post-accident message. The MSD is similar to what is already defined for the current European eCall standard, which defines message content for an (post-) accident signal. It is noted that the example post-accident signal of Table 2 can be adapted to comprise further or less fields as required. In some described embodiments, the post-access signal may particularly comprise an accident severity (as shown in line 9 of Table 2) and the number of occupants (as shown in line 10 of Table 2). Additionally, the location of the occupants is indicated (as shown in line 11 of Table 2), an injury severity (as shown in line 12 of Table 2), and an identification number of the post-accident signal (as shown in line 13 of Table 2). The identification number can be used for fast determination which post-accident signal further is related to which pre-accident signal as is described before.

Moreover, the post-accident signal may also indicate vital signs of each of the passengers (as shown in line 14 of Table 2), a degree of cabin deformation (as shown in line 15 of Table 2), environment hazards if any (as shown in line 16 of Table 2), and a location of the accident (as shown in line 17 of Table 2). This further information may be determined based on internal sensors of the vehicle, wherein the determination is based on at least one of semantic segmentation of the image, depth information analysis of the image, determination of 3-dimensional pose estimation, and vital sign monitoring. Moreover, object detection and classification algorithms may be used, e.g., for determining the environment hazards. Vital sign monitoring may be based in this or other embodiments by connecting a smart watch of a passenger to the vehicle's on-board system. Additionally or alternatively, images captured by on-board cameras may be used to determine vital signs, e.g., by detecting facial expression, skin color change, and/or movement of passengers for generating a remote photoplethysmogram (RPPG) from images.

It is apparent to the skilled person that the post-accident signal is only sent if the electronic compartment of the vehicle is still functional after the accident. This also means that - if no post-accident signal is received by the relay station (and no other signal indicating that no or no severe accident has happened) - the relay station is nevertheless aware of the accident because of the pre-accident signal.

The post-accident signal, i.e., the confirmation signal may then also include vital signs of all occupants after the accident, position and derived medical condition of each occupant through 3D body key points, information on any passengers who may be pinned due to vehicle deformation, object movement in the cabin, critical condition estimation, and exterior analysis such as the condition of other vehicles involved and the presence of fire/smoke etc. This comprehensive data allows emergency responders to assess the severity of the accident and determine the appropriate level of response, including, e.g., the number of firefighters needed.

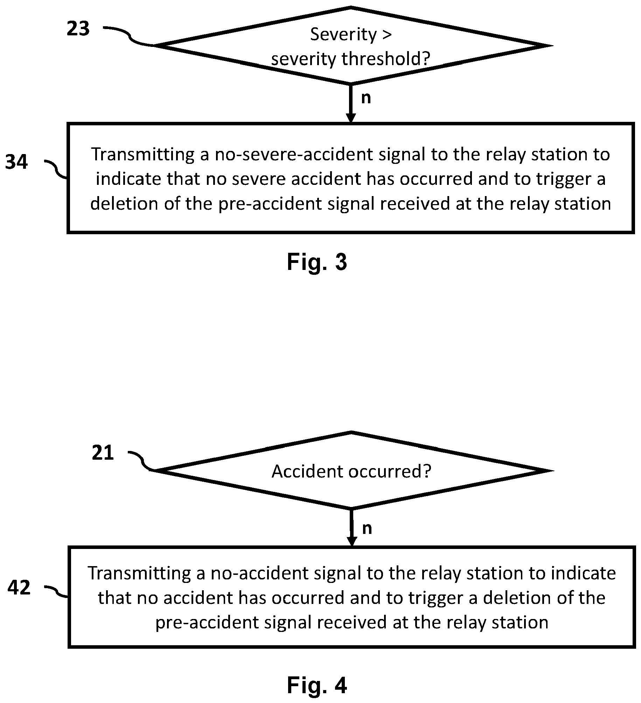

Fig. 3 further depicts a flowchart of the method if a non-severe accident has occurred according to embodiments. In this example, the severity level determined (as in Fig. 2 and shown in diamond 23) but is not above the severity threshold (i.e., taking a no-branch). The method then proceeds to box 34 (not to box 24 as shown in Fig. 2) and transmits a no-severe-accident signal to the relay station to indicate that no severe accident has occurred and to trigger a deletion of the pre-accident signal received at the relay station. This "delete previous message" ping, i.e., the no-severe-accident signal is sent to prevent any personal information from being sent to emergency services. This ensures the privacy and security of the vehicle occupants, as the initial signal is deleted, and no unnecessary emergency response is triggered. As explained before, the relay station waits a pre-determined time after the receipt of the pre-accident signal for another message confirming the accident or withdraw the indication/warning by the pre-accident signal. If no such message is received within a time interval, the emergency response is triggered to ensure a fast response.

The no-severe-accident signal may be required to be issued manually by a passenger of the vehicle via a user interface on a display of the vehicle to confirm that the accident was not severe. Alternatively, the no-severe-accident signal may be issued automatically by the on-board computing system of the vehicle in response to determining that the severity level is lower than the severity threshold. The presentation of the user interface to the passenger may in some further embodiments be triggered by a determination that the severity level is lower than the severity threshold by the on-board computing system.

In some further embodiments, the emergency notification system comprises an extension to handle minor accidents, i.e., with a low severity. The system may determine if the accident was a low-velocity impact and if the driver declines emergency services help (as a hard requirement) and as described before. In such cases, the system may record damage to the interior and exterior of the vehicle and generate an accident report ready for an insurance claim. This report includes insurance information, vehicle information, and interior sensing for driver identification, providing a comprehensive overview of the incident for insurance purposes. In accordance with potential data protection legislation the system will collect this information from vehicles in proximity in advance in many situations (e.g., parking lot, stopping for a traffic light). If the driver was to later manually file a report for damages that the system itself failed to register, the information could already be available. An exemplary Hypertext Markup Language (HTML) structure of such a report is shown in the following Table 3.

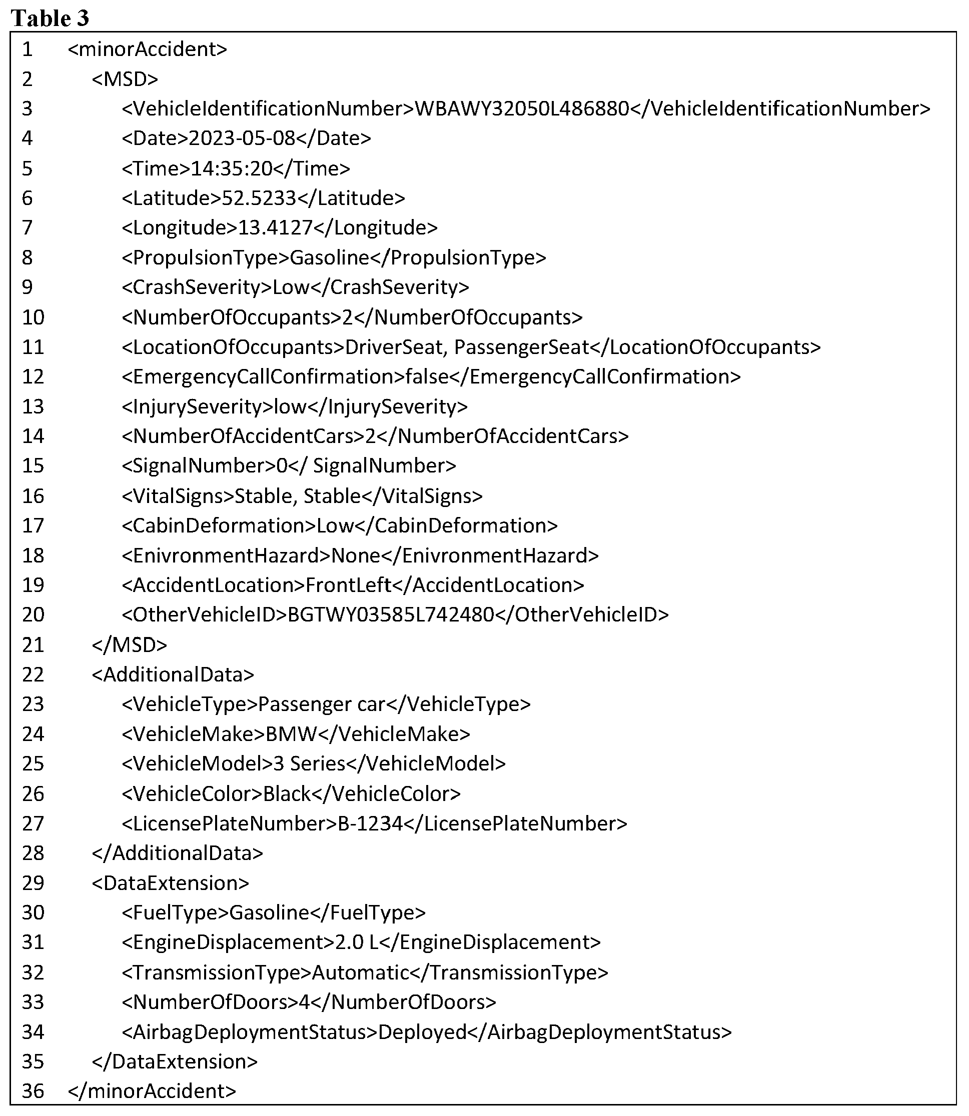

As can be seen in Table 3, the report in this example is structured similar to the pre-accident and post-accident signal. However, the report clearly indicates that no emergency call has been sent (as shown in line 12 of Table 3) as well as information about other vehicles (e.g., as shown in lines 14 and 20). Further information can - as in any embodiment - included in the report, too.

Figs. 2 and 3 relate to the situation that an accident has occurred. However, the predicted crash may also not have occurred, e.g., because both drivers were able to do a full brake. Hence, Fig. 4 depicts a flowchart of the method if no accident has occurred according to such embodiments. Hence, it is determined whether an accident has occurred (as in Fig. 2 and shown in diamond 21). If no accident has happened, the method proceeds to box 42 (instead of box 22 as in Fig. 2) and transmits a no-accident signal to the relay station to indicate that no accident has occurred and to trigger a deletion of the pre-accident signal received at the relay station.

The no-accident signal and the no-severe accident signal may be similar or the same. This is because both indicate to the relay station that the pre-accident signal is to be deleted. A possible Hypertext Markup Language (HTML) structure of such a no-accident or no-severe accident signal is shown in the following Table 4.

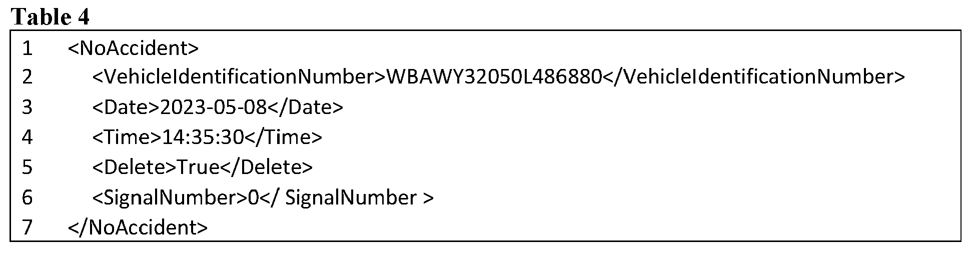

Overall, the herein described automatic emergency call system stands out as it combines exterior perception algorithms with interior sensing algorithms to provide a holistic view of the situation before and after an accident. In some embodiments, the holistic view of the situation includes vital signs, position and medical condition of occupants, vehicle deformation, object movement, and exterior analysis, allowing emergency responders to make informed decisions and respond effectively to the situation. Additionally, the emergency notification system may also incorporate privacy measures by deleting unnecessary information in case of no accidents and includes features for handling minor accidents and generating accident reports for insurance claims

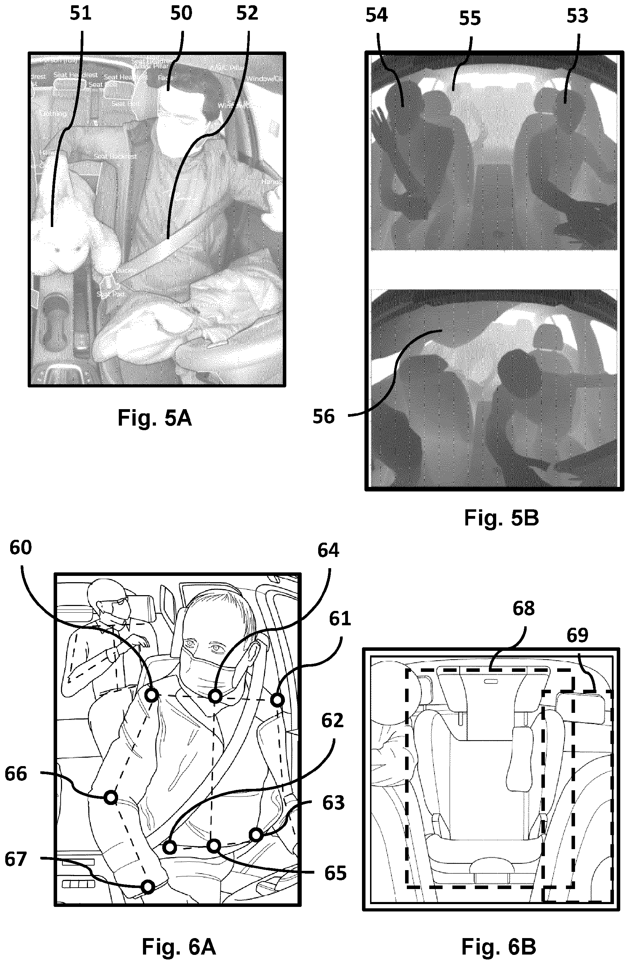

Figs. 5A, 5B, 6A, and 6B show different classified and processed input images from on-board cameras used for determining the vehicle and passenger status information according to embodiments. Such processed input images and the information taken therefrom may also be used for determining whether an accident has occurred, the severity of the accident and further data required for any processes as described above.

Fig. 5A shows an excerpt of an image of an onboard camera, on which semantic segmentation is applied. Semantic image segmentation is a computer vision task that involves classifying each pixel in an image into a specific category or class. This means, semantic segmentation assigns a label to every pixel to indicate what object or region of the image it belongs to. The goal of such an image processing is to partition an image into meaningful segments, where each segment corresponds to a specific object or region with semantic meaning. In the herein described emergency notification system, semantic segmentation may be applied in order to determine relevant regions and to exclude irrelevant regions from further processing. Therefore, semantic segmentation improves the efficiency of the determination of the status of the cabin, e.g., where the passengers are located, where objects are present, etc.

In Fig. 5A, the light pixels at a driver's head 50 are classified as "head", which is a relevant region for determining the injury severity. The light pixels at a stuffed animal 51 are classified "unknown object", which may or may not be relevant for severity determination. Hence, an "unknown object" may, in some embodiments, generally be treated as leading to a high severity, although - as in this example - the stuffed animal 51 may not lead to any injuries. The pixels at the seat belt 52 are classified as "seat belt", which again may be relevant for determining the severity of injuries. For example, in this case, one may determine that the region of the seat belt 52 is not optimally located, i.e., below the left arm of the passenger and not at the shoulder. Hence, if this is the last image before an accident, the estimated severity may be higher due to the routing of the seat belt.

Fig. 5B depicts two depth images. A depth image, also known as a depth map or depth perception image, is a two-dimensional representation of a three-dimensional scene where each pixel in the image contains information about the distance or depth of the corresponding point in the real world. Depth images are typically used in computer vision, robotics, and 3D modeling to capture and understand the spatial characteristics of a scene.

The upper image of Fig. 5B shows a situation in the vehicle before an accident. Three persons are detected, namely, a driver 53, a co-driver 54, and a passenger 55 at the left rear seat. In the lower image, the cabin is deformed. Hence, the deformation or a degree of deformation of the cabin can be determined by using the depth image. Here, a large bump 56 in the roof of the vehicle is depicted. If the depth, e.g., distance to the camera of the bump 56 after the accident is similar to the depth of the head of the passenger 55 before, a high severity may be determined for the accident.

Fig. 6A depicts an extract of an input image provided by an on-board camera, i.e., an internal sensor according to the disclosure. Two persons can be detected, one at the driver seat and one behind. A body key point detector, e.g., based on a machine learning algorithm, such as a neural network, a random forest, a support vector machine, a boosting cascade algorithm, or the like, has been applied on the image and has determined body key points for the passengers, e.g., in the following on the example of the driver. The body key point detector has detected shoulder key points, e.g., for the right shoulder 60 and the left shoulder 61, hip key points, e.g., for the right hip 62 and for the left hip 63, a center shoulder key point 64, a center hip key point 65, an elbow key point 66, and a wrist key point 67. The body key point detector may have also identified further key points, which are not depicted in Fig. 6, e.g., the knees, the ankles, and the like. For some passengers, not all key points may be detectable, e.g., because arms are behind another person or seat. For implementing a body key point detector, any image classifier may be used that is capable of determining and classifying regions on a human's body.

It should be noted that body key points may be determined for any person on one or more images taken by one or more on-board cameras, e.g., also for the person sitting on the co-driver seat or on the rear seats. The images taken by the on-board cameras may also be subdivided into regions, e.g., seat regions, so that for each seat the respective body key points are determined. In some embodiments, the images of multiple cameras may also be merged to determine a 3D image of the interior in which the body key points are determined. Based on body key points, the poses of the passengers before and after the accident may be determined such that the severity of the accident, the injuries, vital signs of passengers, and the like may be determined. Hence, the skeletons of the body key points may provide additional information about the state of each passenger before and after an accident regarding vital signs, consciousness and positioning or deformation.

Fig. 6B shows an images with determined objects. Object detectors, e.g., based on a machine learning classifier such as a neural network, a random forest, a support vector machine, a boosting cascade algorithm, or the like, may detect objects, persons, and/or seat regions in the images from the on-board camera(s) and return bounding boxes around the detected objects as well as a classification of the type of the object. For example as is shown in Fig. 6B, a bounding box 68 around a child seat is determined and depicted. The respective corner pixel values, e.g., the position of the pixels, may be associated with the object of type 'child seat'. Moreover, with a bounding box 69, the seat region of the left rear seat (in driving direction) is determined and marked.

Object detection algorithms based on machine learning, can learn a plethora of different objects. Hence, objects can be flexibly added into training data. Such objects may also be non-living objects such as a child seat, mobile phone, tablet, laptop, food, cup, book, and newspaper, or may be living objects or part of living objects such as animal, human, human's hand, human's head, and the like. Objects inside the vehicle may be identified prior to the accident in order to provide a likelihood of injury due to unsecured loads inside the vehicle. Presence and absence of passengers may be automatically derived from a single monocular camera mounted at e.g., the rear mirror, by the help of object detection algorithms. With the help of object detections and/or body key points, identification and classification of driver behavior can be added to the automatic insurance report as described before. For example, it may be added if the driver was distracted by a cellphone or the like.

Fig. 7 is an overview on the processes performed for emergency notification according to embodiments. On the left-hand side, the data sources are depicted, which may be used by the herein described emergency notification system. Internal sensor data 70, such as data from on-board cameras and other internal sensors, external sensor data 71, such as data from radar sensors, cameras, and lidar sensors capturing a surrounding of the vehicle at specified time intervals, and vehicle data 72, such da vehicle data from driver assistance systems, the on-board computing system, and the like, may be can be fused to detect whether an accident is likely to happen.

For example, situations in which distraction of the driver is likely to create a situation in which an accident is very likely to occur or to not be able to react to those situations can be determined by using all three forms of information. Assuming that the vehicle is driving straight on a rural road. An oncoming car is overtaking a truck suddenly placing the oncoming car in the same lane as the vehicle. The external sensors detect this scenario, the vehicle data provides velocity of the vehicle, and interior sensors reveal that the driver of the vehicle is currently distracted on the phone. Even though emergency braking of the vehicle and acoustic signals to the driver can help in decreasing the severity of the accident, the system could estimate with relatively high accuracy that an accident is not fully avoidable at this point.

If it is determined that an accident is not avoidable, the pre-accident signal 73 (as described before) is sent to a relay station comprising vehicle and passenger status information generated based on vehicle data 72 before the accident, data received from one or more of the external sensors 71 before the accident, and data received from one or more of the internal sensors 70 before the accident. If no crash happens (e.g. by determining by an on-board computing system that no deacceleration has taken place), passengers of the vehicle are, in this example, provided with a user interface 74 in order to confirm that no crash has happened. If a passenger confirms this, a no-accident signal 75 is transmitted to the relay station.

If an accident has happened (e.g. by determining by an on-board computing system that a deacceleration has taken place), the severity is determined and checked, whether the accident was severe of not (shown in diamond 76). The severity is determined, in some embodiments, by taking data received from one or more of the internal sensors 70 and/or data received from one or more of the external sensors 71 into account. For example, the severity may be determined to be high(er) if the external sensors 71 detect that, e.g., this or other cars are on fire, persons around the car are injured, or the like. Alternatively or additionally, the severity may be determined to be high(er) if the internal sensors 70 detect that, e.g., the passengers are in unnatural positions, have wounds, or the like.

If the severity is determined to be high (as described for other embodiments above), i.e., the accident was severe, a post-accident signal 77 (as described before) is transmitted to the relay station. If the severity is determined to be low (as described for other embodiments above), i.e., the accident was not severe, passengers of the vehicle are, in this example, provided with a user interface 79 in order to confirm that no severe crash has happened. If a passenger confirms this, a no-accident signal 75 is transmitted to the relay station. In this embodiment, the no-accident signal 75 also serves as no-severe accident signal. Moreover, although the user interfaces 74 and 79 are shown as differing, both may be presented on the same display in the vehicle.

Fig. 8 presents a car with sensors and systems for providing information before and after an accident. An on-board camera 81 is depicted as a sensor, which senses the cabin's interior. There may be different positions of such on-board cameras, which are further described with respect to Fig. 9. The on-board camera 81 provides a computing system 82 with raw or preprocessed image data. A preprocessing unit (not shown) may be placed between the on-board camera 81 and the computing system 82. The computing system 82 may also receive other raw or preprocessed data from other sensors, such as from a wheel (e.g., speed, velocity, acceleration) sensor 83, a door sensor 84, a distance sensor 85 or any further internal or external sensors provided by the vehicle. The preprocessing unit may also preprocess the raw data from the other sensors before it is provided to the vehicle's computing system 82.

Additionally, the computing system 82 may receive additional data from an advanced driver assistance system 86, which is connected to a plurality of sensors, e.g., wheel sensor 83, front distance sensor 85, side distance sensor 87, parking sensor 88 (also qualifying as distance sensor), further distance sensors (not shown), and such. The skilled person will understand that Fig. 8 is only schematic and there may be more or less sensors comprised by the car.

The advanced driver assistance system 86 generally includes technologies that assist drivers with the safe operation of a vehicle. The advanced driver assistance system 86 uses input from as sensors to detect nearby obstacles or driver errors. Hence, the advanced driver assistance system 86 already holds plenty of information that can be provided to the vehicle computing system 82 for determining the vehicle and passenger status information.

Moreover, the computing system 82 may also be connected to an on-board infotainment system 89. The on-board infotainment system 89 is a collection of hardware and software in vehicles that provides audio or video entertainment but also allows passengers to interact with the computing system 82 via a user interface. The on-board infotainment system 89 may in some embodiments be used by the passengers to issue the no-severe-accident signal or the no-accident system as described above.

Fig. 9 presents an interior of a vehicle with possible positions of cameras. The vehicle may only comprise one camera but only a plurality of cameras at different positions. The cameras, which may be color, monochrome, or grayscale cameras, infrared cameras, depth cameras, thermal cameras, event (i.e. cameras that operate at very high frame rates and only output the inter-frame differences, e.g., motion), or time-of-flight cameras, or a combination thereof, may be placed in a centric position to allow capturing the full cabin, e.g. in the rear view mirror region (positions 91 and 92) or in the upper center stack (position 93).

Additionally or alternatively, one or more cameras may be located in front of the driver in the instrument cluster or on the steering column as depicted with position 94, or in the A-pillars as depicted with positions 95 and 96. Further cameras can be located, e.g. in back of the front row seats, in the B-pillars or ceiling to have a better visibility on the second or third seating row. With two or more cameras a depth image or 3D image can be created from the multi view geometry and based on principle of triangulation (e.g. stereo camera). These cameras may then capture images, e.g., at regular time intervals or if trigged by an application that requires vehicular safety monitoring as described herein. The applications using the images may be executed on the on-board computing system or at least in part executed remotely, e.g., in the cloud. Other sensors may also or additionally be present on the places shown in Fig. 9, such as interior radar sensors and/or interior lidar sensors.

Fig. 10 is a diagrammatic representation of internal components of a computing system 100 implementing the functionality as described herein. The computing system 100 may be located in the vehicle and includes at least one processor 101, a user interface 102, a network interface 103 and a main memory 106, that communicate with each other via a bus 105. Optionally, the computing system 100 may further include a static memory 107 and a disk-drive unit (not shown) that also communicate with each via the bus 105. A video display, an alpha-numeric input device and a cursor control device may be provided as examples of user interface 102.

Furthermore, the computing system 100 may also comprise a specified camera interface 104 to communicate with an on-board camera of the vehicle. Alternatively, the computing system 100 may communicate with the camera via the network interface 103. The camera is used for taking the image. The computing system 100 may also be connected to database systems (not shown) via the network interface, wherein the database systems store at least part of the images for providing the functionalities described herein.

Compared to, e.g., existing eCall systems, the herein described emergency notification system provides a faster pre-accident signal as well as additional information to emergency responders, including, e.g., the accident location, number of cars involved, vital signs of all passengers, and the position of all passengers inside the vehicle, obtained from interior cameras using 2D and 3D body key points. Based on defined and determined severity levels, different recommendations may be included in the herein described signals, e.g., which and how may emergency responders are to be requested with the post-accident signal. Furthermore, the system may use exterior vision algorithms to analyze data from radar, cameras, and lidar to predict if an accident is about to happen and to assess the likely severity of the accident. By sending out a short signal before the accident, it is ensured that emergency services are notified in a timely manner, even if the vehicle's electronics are damaged in the accident. Overall, the herein described emergency notification system provides a more comprehensive and proactive approach to emergency response, ultimately leading to improved outcomes for those involved in accidents.

The main memory 106 may be a random-access memory (RAM) and/or any further volatile memory. The main memory 106 may store program code for a vehicle monitoring compute software 108 and a communication software 109. Other modules needed for further functionalities described herein may be stored in the memory 106, too. The memory 106 may also store additional program data 110 required for providing the functionalities described herein, such as for preprocessing and the like. Part of the program data 110, the vehicle monitoring compute software 108 and/or the communication software 109 may also be stored in a separate, e.g., cloud memory and executed at least in part remotely.

According to an aspect, a vehicle is provided. The herein described methods may be stored as program codes 108, 109, or 110 and may be at least in part comprised by the vehicle. Parts of the program codes 108, 109, or 110 may also be stored and executed on a cloud server to reduce the computational effort on the vehicle's computing system 100. The vehicle may also comprise one or more cameras, e.g., connected via the camera interface 104, for capturing one or more images.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory

(EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computerized method of emergency notification for a vehicle, wherein the vehicle comprises external sensors and internal sensors, the method comprising
- predicting a likelihood of an occurrence of an accident of the vehicle based on vehicle data and data received from one or more of the external sensors; and
- in response to the likelihood of the occurrence of the accident being higher than an accident threshold, transmitting a pre-accident signal to a relay station, wherein the pre-accident signal comprises vehicle and passenger status information generated based on vehicle data before the accident, data received from one or more of the external sensors before the accident, and data received from one or more of the internal sensors before the accident.

2. The method of claim 1 further comprising:
- in response to the accident having occurred, determining a severity level of the accident based on vehicle data, data received from one or more of the external sensors, and data received from one or more of the internal sensors;
- in response to the severity of the accident being higher than a severity threshold, transmitting a post-accident signal to the relay station, wherein the post-accident signal indicates a confirmation of the accident and comprises vehicle and passenger status information generated based on vehicle data after the accident, data received from one or more of the external sensors after the accident, and data received from one or more of the internal sensors after the accident.

3. The method of claim 2 further comprising:
- in response to the severity level of the accident being lower than the severity threshold, transmitting a no-severe-accident signal to the relay station to indicate that no severe accident has occurred and to trigger a deletion of the pre-accident signal received at the relay station.

4. The method of claim 3, wherein the no-severe-accident signal is issued manually by a passenger of the vehicle via a user interface on a display of the vehicle or automatically by an on-board computing system of the vehicle in response to determining that the severity level is lower than the severity threshold.

5. The method of any one of the preceding claims further comprising:
- in response to the accident not having occurred, transmitting a no-accident signal to the relay station to indicate that no accident has occurred and to trigger a deletion of the pre-accident signal received at the relay station.

6. The method of claim 5, wherein the no-accident signal is issued manually by a passenger of the vehicle via a user interface on a display of the vehicle or automatically by an on-board computing system of the vehicle in response to detecting based on data from at least one of the external sensors and internal sensors that the accident has not occurred.

7. The method of any one of the preceding claims, wherein the vehicle data comprises at least one of speed, acceleration, steering direction, tire orientation, and geographic position of the vehicle.

8. The method of any one of the preceding claims, wherein the external sensors comprise at least one of a radar sensor, a camera, and a lidar sensor capturing a surrounding of the vehicle at specified time intervals.

9. The method of any one of the preceding claims, wherein the internal sensors comprise at least one cabin camera capturing a cabin of the vehicle a specified time intervals.

10. The method of claim 9, wherein the vehicle and passenger status information before and after the accident is determined based on images captured by the cabin camera, wherein the determination is based on at least one of semantic segmentation of the image, depth information analysis of the image, determination of 3-dimensional pose estimation, and vital sign monitoring.

11. The method of any one of the preceding claims, wherein the vehicle and passenger status information before the accident comprises at least one of an estimated severity level of the accident, a vehicle location, an estimated number of vehicles involved, an estimated type of vehicles involved, object movement prediction, a number of passengers in the vehicle, vital signs of passengers in the vehicle, a position of the passengers in the vehicle, and a seatbelt status of the passengers in the vehicle.

12. The method of any one of claim 2 to 11, wherein the vehicle and passenger status information after the accident comprises at least one of a severity level of the accident, a vehicle location, a number of vehicles involved, a type of vehicles involved, vehicle deformation information, an accident location at the vehicle, object movement information, environment hazard information, a number of passengers in the vehicle, vital signs of passengers in the vehicle, a position of the passengers in the vehicle, injury severity information of the passengers in the vehicle, and a seatbelt status of the passengers in the vehicle.

13. A system of emergency notification, the system comprising:
- one or more internal sensors,
- one or more external sensors; and
- a computing and communication system configured to execute the method according to claims 1 to 12.

14. A vehicle comprising the system of emergency notification according to claim 13.

15. A computer program product comprising instructions, which, when executed on a computer, cause the computer to perform the method any one of claims 1 to 12.
